# EUROPÄISCHE PATENTSCHRIFT

(11) **EP 2 269 924 B1**
(45) Veröffentlichungstag und Bekanntmachung des Hinweises auf die Patenterteilung: **01.10.2014**
(21) Anmeldenummer: 10005646.4
(22) Anmeldetag: 31.05.2010
(51) Int. Cl.: B65G 47/08, B65G 47/31, B65G 47/26, B65B 9/04, B65B 61/28

(54) **Verfahren zum Gruppieren von Packungen**
Method for grouping packages
Procédé destiné au groupement d'emballages

(30) Priorität: 02.07.2009 DE 102009031516
(43) Veröffentlichungstag der Anmeldung: 05.01.2011
(73) Patentinhaber: MULTIVAC Sepp Haggenmüller GmbH & Co KG, 87787 Wolfertschwenden (DE)
(72) Erfinder: Wörz, Nobert, 87746 Erkheim (DE)
(74) Vertreter: Grünecker, Kinkeldey, Stockmair & Schwanhäusser

(56) Entgegenhaltungen:
- US-A- 3 348 655
- US-A- 3 690 438
- US-A- 5 507 134

## Beschreibung

Die vorliegende Erfindung bezieht sich auf ein Verfahren gemäß dem Oberbegriff von Anspruch 1, vorzugsweise zum Einsatz an Tiefziehverpackungsmaschinen oder Schalenverschließmaschinen.

Aus der Praxis sind Verpackungsanlagen bekannt, mit denen Packungen auf einer Tiefziehverpackungsmaschine oder Schalenverschließmaschine hergestellt und anschließend über Transportbänder einzeln und mit notwendigem Abstand durch bzw. über Prüfvorrichtungen wie Metalldetektor und/oder Waage transportiert werden. Anschließend werden diese einzelnen Packungen beispielsweise in Gruppen in eine Umverpackung, beispielsweise einen Karton, ausgeführt, eingebracht und eingelagert. Dies kann manuell durch eine Person erfolgen oder durch einen Roboter, der die Packungen vom Transportband abnimmt und in die Umverpackung einbringt.

Für den Einsatz von Robotern zum automatischen Aufnehmen der Packungen von den Transportbändern müssen die Positionen der Packungen bekannt sein bzw. müssen die Packungen einen definierten Abstand zueinander und passend zum Greifersystem besitzen. Vorzugsweise werden hier Greifersysteme mit Vakuumsaugern eingesetzt.

Zur Raum- und Kosteneinsparung, die sich aus dem Flächenbedarf von mehreren Packungen in einer Ebene ergibt, sollen Packungen möglichst eng aneinanderliegend oder geschachtelt in die Umverpackung eingebracht werden. Bei im Lebensmittelbereich üblichen Packungen handelt es sich um Kunststoffverpackungen mit einem formstabilen umlaufenden Rand, der gleichzeitig auch die Siegelfläche zwischen dem Unterteil und der Deckelfolie darstellt. Hier kann durch das Überlappen von zwei benachbarten Packungen die Breite des Siegelrandes als Raumreduzierung erreicht werden. Dieses Überlappen in der Umverpackung kann beim manuellen Einlegen von einzelnen Packungen nacheinander erzielt werden. Bei einem automatisierten System mit einem Roboter ist dies über den Transport von einzelnen Packungen möglich, aber für hohe Maschinenleistungen, definiert durch Packungen pro Minute, ist dies nicht machbar.

Die US 5,507,134 A offenbart eine Vorrichtung zum Gruppieren von üblicherweise biegeschlaffen Beutelverpackungen auf einem Gruppierband. Dabei erfolgt eine Gruppierung derart, dass sich aufeinanderfolgende Packungen in Transportrichtung teilweise überlappen. Erreicht wird die

Überlappung entweder durch ein höhenveränderbares Zuführband oder durch einen vertikal bewegbaren Stopper.

Andere Vorrichtungen für den Transport von Behältern sind aus der US 3,690,438 oder der US 3,348,655 bekannt.

Eine weitere bekannte Möglichkeit ist das Aufnehmen von Packungen mit einem Greifersystem, das in der Lage ist, die noch beabstandeten Packungen während des Transportes von einem Band in eine Umverpackung über eine Vorrichtung am Greifer zueinander zu verschieben, um die gewünschte Überlappung zu erzeugen. Als nachteilig stellt sich heraus, dass diese Greifersysteme mechanisch aufwendig und teuer sind und durch das erhöhte Gewicht die Beschleunigungen und Geschwindigkeiten stark begrenzt sind.

Es ist Aufgabe der Erfindung, eine Möglichkeit zu schaffen, um ein Greifersystem einfach, leicht und günstig herstellbar und zugleich auch mit hohen Beschleunigungen und Geschwindigkeiten bewegbar ausführen zu können.

Diese Aufgabe wird gelöst durch ein Verfahren mit den Merkmalen des Anspruchs 1, indem Packungen mit einem formstabilen überstehendem Rand zueinander bewegt werden und sich dabei die überstehenden Ränder auf einem Gruppierband so überlappen, dass der Rand der vorherigen Packung über dem Rand der nachfolgenden Packung zum Liegen kommt. Vorteilhafte Weiterbildungen der Erfindung sind in den Unteransprüchen angegeben.

Ein Hauptanwendungsbereich der Erfindung liegt in der Verwendung von verpackten Lebensmitteln wie Portionen von geschindelten Wurstscheiben zu beispielsweise 100g oder 200g. Diese Portionen werden üblicherweise in fertige Schalen oder in die Mulden einer tiefgezogenen Folie eingelegt, und der Inhalt der Packung wird vor dem Versiegeln durch eine Deckelfolie in einer Siegelstation evakuiert und/oder begast mit dem Ziel einer langen Haltbarkeit.

Die Schale oder die Mulde ist aus optischen Gründen und für einen geeigneten Transport und/oder Lagerung aus einer stärkeren Folie hergestellt, die in der Lage ist, auch nach dem Evakuiervorgang und/oder Begasen die gewünschte Form beizubehalten. Die Deckelfolie ist eine dünnere Folie, die auf den Packungsrand umlaufend dichtend aufgesiegelt wird; somit entsteht eine stabile Packung mit einer ebenen gespannten Deckfolie, die meist bedruckt ist oder optional noch mit einem Etikett versehen wird, auf dem Inhaltsstoffe, Gewichts- oder Preisangaben beinhaltet sind.

Diese Packungen werden nach der Herstellung auf Tiefziehverpackungsmaschinen oder Schalenverschließmaschinen vereinzelt und mit einem größeren Abstand auf Transportbändern hintereinander durch Prüfeinrichtungen wie Metalldetektoren und über Waagen transportiert, somit gelangen diese Packungen vereinzelt und beabstandet über ein Transportband an das Zuführband.

Wenn das dem Zuführband nachgeschaltete Gruppierband in der Höhe nach oben versetzt ist, ist die Lage des Randes der zuletzt auf das Gruppierband bewegten Packung relativ zum Rand der folgenden Packung zum Zeitpunkt der Übernahme auf das Gruppierband oberhalb gelegen. So kann auf einfache Weise eine Überlappung erzielt werden, da bereits ein kleiner vertikaler Abstand genügt, der mindestens der Stärke des Packungsrandes entspricht. Dieser Abstand, der sehr klein ausgeführt sein kann, ist vorteilhaft für einen prozesssichern und schlupffreien Übergang der Packung vom Zuführband auf das Gruppierband.

Zusätzlich oder alternativ zu einem Höhenversatz kann auch eine Einrichtung zum Kippen am Gruppierband eingesetzt werden, bei dem eine nachfolgende Packungen auf dem Gruppierband im Winkel so zur vorherigen Packung geneigt ist, dass beim Annähern an die vorherige Packung der Rand der nachfolgenden Packung unterhalb des Randes der vorherigen Packung überlappend zum Liegen kommt. Für dieses Ausführungsbeispiel ist die Verwendung von Stoppern oder Bremsen für vorherige Packungen vorteilhaft, um eine Relativbewegung zwischen der nachfolgenden und vorherigen Packung zu bewirken.

Für einen schlupffreien Übergang vom Zuführband auf das Gruppierband kann eine Steuerung die Geschwindigkeit mindestens eines Bandes so regeln, dass für die Zeit, in der der Packungsboden sich sowohl noch auf dem Zuführband oder Transportband, als auch bereits auf dem Gruppierband befindet, die Geschwindigkeiten beider Bänder synchronisiert sind. Dies kann man sich zu Nutze machen, um die Position der Packung, die bereits auf dem Zuführ- oder Transportband ermittelt wurde, somit auch weiter für die Lagebestimmung der Packung auf dem Gruppierband nutzen zu können.

Um den Abstand der Packungen, so wie er auf den Transportbändern vorhanden ist, auf den gewünschten Abstand auf dem Gruppierband zu verringern, wird zweckmäßigerweise die Geschwindigkeit mindestens eines Bandes durch die Steuerung so geregelt, dass die Geschwindigkeit des nachfolgenden Bandes kleiner ist als die des vorgeschalteten Bandes.

Es kann notwendig sein, die Produkte schonend transportieren zu müssen. In diesem Fall sind hohe Geschwindigkeits- und Beschleunigungsänderungen zu vermeiden. Hier kann der große Abstand von den Packungen durch ein erstes Zuführband durch Regeln der Bandgeschwindigkeiten verringert werden, zum Beispiel auf 50%. Ziel ist es, ein Anhalten des Transport-, Zuführ- oder Gruppierbandes zu vermeiden, da dies sowohl beim Stoppen wie beim Wiederstarten zu Zeit- bzw. Leistungsverlusten der Anlage führt, da die Beschleunigungen sanft ablaufen sollen. Diese Anforderung kann durch die Verwendung von mehreren Bändern erfüllt werden, die in mehreren Stufen den Abstand durch die Regelung der Geschwindigkeiten der Bänder auf den gewünschten Abstand und Geschwindigkeit auf dem Gruppierband bringt, wobei die Geschwindigkeitsunterschiede um so kleiner ausgeführt sind, je mehr Bänder vorhanden sind.

Nachdem der Rand der nachfolgenden Packung unter den Rand der vorherigen Packung bewegt wurde, ist die Position dieser zwei Packungen zueinander noch zu steuern. In der optimalen und einfachsten Form dient die hintere Seitenwand der vorherigen Packung als Anschlag und somit als bekannte Position der nachfolgenden Packung zur vorherigen, und die Raumeinsparung durch diese Überlappung wäre maximal erfolgt.

Um die Position von Packungen oder speziell einer ersten Packung einer Gruppe von Packungen erstmalig zu erfassen oder zu kontrollieren, können Lichtschranken oder Sensoren eingesetzt werden, die in der Lage sind, eine Packungswand oder eine Kante eines Packungsrandes zu erfassen und diese Information an die übergeordnete Steuerung weiterzugeben, damit für weitere Prozesse wie Bandübergänge oder Positionierung der Packungen die entsprechenden Informationen ermittelt und zur Verfügung gestellt werden können.

Um die Baulänge einer für das erfindungsgemäße Verfahren einsetzbaren Vorrichtung zu begrenzen, können die Packungen kontinuierlich und um den Packungsrand überlappend auf dem Gruppierband angeordnet werden.

Sollte es hingegen für den nachfolgenden Prozess notwendig sein, dass Gruppen von Packungen einen Abstand zu einander besitzen, kann dies ebenfalls mit dem erfindungsgemäßen Verfahren ausgeführt werden.

Als Variante zu einem Band, das die Packung aufliegend und haftend transportiert, sind auch Ausführungen denkbar, bei denen die Packung durch Anschläge oder Schieber, die beispielsweise an einer Kette befestigt sind, über eine Ebene verschoben und somit positioniert wird.

Falls der Haftreibungskoeffizient zwischen Band und Packungsboden sehr klein ist, so dass bei Geschwindigkeitsänderungen des Bandes ein Schlupf zwischen dem Packungsboden und dem Band entstehen kann, welcher zur einer Verfälschung der unbekannten Positionsveränderung in der Steuerung führen würde, kann ein Anschlag am Ende des Gruppierbandes die Position der vordersten einzelnen Packung oder einer Gruppe von Packungen definieren.

Es ist vorteilhaft, die Position der Packungen zu kennen, um einem nachfolgenden System wie einem Greifersystem zur Abnahme der Packungen für den Weitertransport und Einbringen in eine Umverpackung oder einer weiteren Arbeitsstation diese Positionsinformation übergeben zu können.

Für eine maximale Raumeinsparung kann es sinnvoll sein, auch in einer zweiten Richtung, die in Querrichtung zur ersten Überlappung liegt, die Packungsränder überlappen zu lassen.

Um die Leistung der Verpackungsanlage zu erhöhen, kann die Zuführung von Packungen über mehrere parallel laufende Transportbänder und den Transport durch den Greifer von n mal m Packungen erfolgen. So könnte eine ganze zweidimensionale Lage von Packungen für den Behälter in einem Transportvorgang durch das Greifersystem eingelegt werden, um so die Leistung der Verpackungsanlage weiter zu steigern.

Um einen möglichst schonenden und kontinuierlichen Prozess zu gewährleisten, ist es sinnvoll, die Packungen bei laufendem Gruppierband durch das Greifersystem abnehmen zu lassen.

Bei dem erfindungsgemäßen Verfahren zum Gruppieren von Packungen mit einem formstabilen überstehenden Rand auf einem Gruppierbandwerden die Packungen in ihrem Abstand so zueinander verringert, dass eine Überlappung des Randes der vorigen Packung über den Rand der nachfolgenden Packung erzeugt wird.

Das erfindungsgemäße Verfahren findet seinen Einsatz bei Packungen, die einen Behälter und eine auf dem Rand umlaufend aufgesiegelte, vorzugsweise ebene Deckelfolie aufweisen. Diese

Packungen bringen die notwendige Stabilität für eine Überlappung mit, und der Packungsrand ist hierbei so breit, dass ein Einsparungspotential für Raum und Kosten vorhanden ist.

Im Ablauf des erfindungsgemäßen Verfahrens werden Packungen, die zuvor mit Produkten gefüllt und mit einer Deckelfolie verschlossen wurden und/oder weitere Arbeits- oder Prüfstationen durchlaufen haben, vereinzelt über ein oder mehrere Transportbänder zugeführt.

Um den Abstand zwischen zwei benachbarten Packungen zu verringern, ist die Geschwindigkeit eines oder mehrerer folgender Zuführbänder kleiner als die Geschwindigkeit der vorigen Transportbänder. Bei Verwendung von mehreren Bändern kann die Abstandsverringerung in Stufen durch kleinere Geschwindigkeitsunterschiede und somit packungs- oder produktschonender ausgeführt werden.

Zur schlupffreien Übergabe der Packung von einem Band zum nächsten Band regelt vorzugsweise die Steuerung die Geschwindigkeiten einzelner oder mehrerer Bänder, um eine Synchronisierung der Geschwindigkeiten zweier benachbarter Bänder für die Zeit der Packungsübergabe zu erreichen.

Auf dem Gruppierband können auch Gruppen von n Packungen mit einem Abstand zwischen den Gruppen gebildet werden. Dies kann je nach technischer Ausführung des Greifersystems, das die Packungen von dem Gruppierband abnimmt und weitertransportiert, notwendig sein.

Im Folgenden werden vorteilhafte Ausführungsbeispiel der Erfindung anhand einer Zeichnung näher erläutert. Im Einzelnen zeigen:
- Figur 1:: eine schematische Seitenansicht einer für das erfindungsgemäße Verfahren verwendbaren Vorrichtung in einer Form mit einem Zuführband und einem Gruppierband mit vorgelagertem Transportband und nachgeschaltetem Greifersystem,
- Figur 2:: eine schematische Seitenansicht einer Verpackung im Sinne einer erfindungsgemäßen Verwendung,
- Figur 3:: eine schematische Seitenansicht eines Gruppierbandes mit beabstandeten Gruppen von Packungen,
- Figur 4:: eine schematische Seitenansicht und vertikalen Schnitt eines mehrspurigem Bandsystems,
- Figur 5:: einen schematischen Vertikalschnitt durch die Vorrichtung an der in Figur 4 mit V-V bezeichneten Stelle,
- Figur 6:: eine Variante der Vorrichtung,
- Figuren 7a, 7b:: eine weitere Variante der Vorrichtung,
- Figur 8:: eine weitere Variante der Vorrichtung,
- Figur 9:: eine weitere Variante der Vorrichtung.

Gleiche Komponenten werden in den Figuren durchgängig mit gleichen Bezugszeichen versehen.

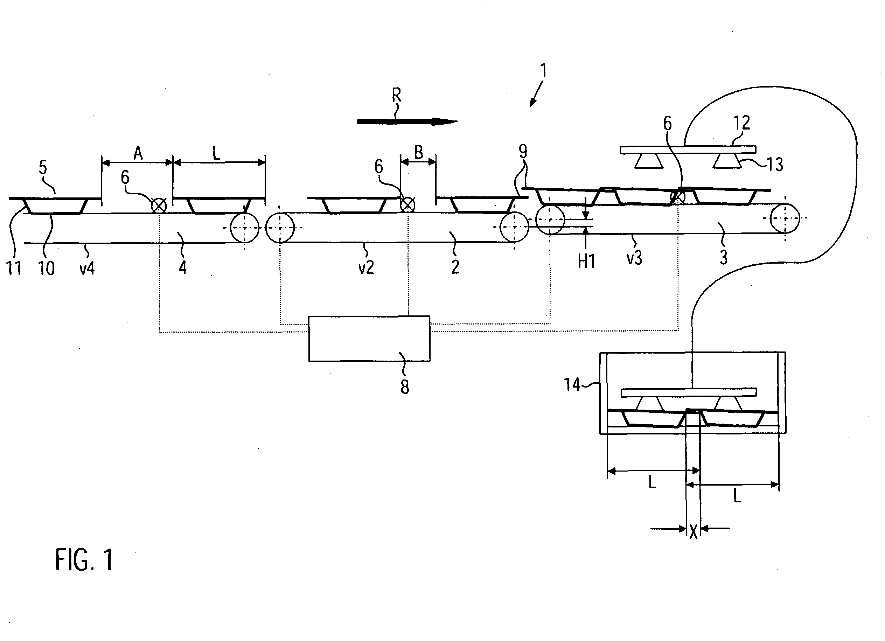

Figur 1 zeigt eine Vorrichtung 1 in einer Ausführung mit einem Zuführband 2 und einem dem Zuführband nachgeschalteten Gruppierband 3. Über ein vorgelagertes Transportband 4 werden Packungen 5 mit einem variablen Abstand A zugeführt. Da die Geschwindigkeit v2 des Zuführbandes 2 kleiner ist als die Geschwindigkeit v4 des Transportbandes 4, verringert sich der Abstand von zwei benachbarten aufeinanderfolgenden Packungen 5 vom Abstand A auf dem Transportband 4 auf einen geringeren Abstand B der Packungen 5 zueinander auf dem Zuführband 2.

Eine Lichtschranke 6 zum Erfassen der Position der Packung 5 auf dem Zuführband 2 leitet ein Signal zu einer Steuerung 8 weiter. Über die Erfassung der Positionen der Packungen 5 regelt die Steuerung 8 die Geschwindigkeit v2 des Zuführbandes 2 und/oder die Geschwindigkeit v3 des Gruppierbandes 3. Weiterhin ist auch eine zusätzliche oder alternative Erfassung der Position der Packungen 5 auf dem Transportband 4 denkbar. Somit ist die Steuerung 8 in der Lage, die Bandgeschwindigkeiten vorausschauend und dadurch mit geringeren Geschwindigkeitsunterschieden der einzelnen Bänder 2, 3, 4 zueinander zu regeln und die Packungen 5 kontinuierlich und schonend entlang der Vorrichtung 1 zu transportieren.

In der Figur 1 ist ebenso dargestellt, dass ein Höhenversatz H1 vom Zuführband 2 zum Gruppierband 3 vorhanden ist. Der Rand 9 der Packungen 5, die sich auf dem Gruppierband 3 befinden, liegt höher als der Rand 9 der Packung 5, die sich am Ende des Zuführbandes 2 befindet.

Die Steuerung 8 regelt mit Hilfe der Information über die Positionen der Packung 5 am Ende des Zuführbandes 2 und der Packung 5 am Anfang des Gruppierbandes 3 die Geschwindigkeit v2 des Zuführbandes 2 und/oder die Geschwindigkeit v3 des Gruppierbandes 3 so, dass beim Übergang der Packung 5 vom Zuführband 2 auf das Gruppierband 3 der Rand 9 der nachfolgenden Packung 5 unter dem Rand 9 der vorherigen Packung 5 zum Liegen kommt.

Während des Übergangs der Packung 5 vom Zuführband 2 auf das Gruppierband 3 werden die Geschwindigkeiten v2, v4 so synchronisiert, dass kein unerwünschter Schlupf zwischen dem Packungsboden 10 und dem Zuführband 2 sowie Gruppierband 3 auftritt und der Rand 9 der Packung 5 auf ein vorgegebenes Maß für die Überlappung X positioniert wird.

Erfindungsgemäss wird die hintere Seitenwand 11 der vorherigen Packung 5 für den Rand 9 der nachfolgenden Packung 5 als begrenzender Anschlag genutzt. Hierfür wird vorteilhafterweise die Geschwindigkeit v3 des Gruppierbandes 3 gegenüber der Geschwindigkeit v2 des Zuführbandes 2 verringert oder angehalten. Alternativ kann auch ein Anschlag vorhanden sein, der die vorherige Packung 5 oder die Gruppe anhält, während die Bänder 2, 3 weiterlaufen.

Diese Gruppe aus kontinuierlich überlappten Packungen 5 wird weitertransportiert, um eine nächste Packung 5 vom Zuführband 2 aufzunehmen. Sobald die Gruppe die Position erreicht hat, bei der sie von einem Greifersystem 12 aufgenommen werden kann und das Greifersystem 12 bereits wieder für eine Aufnahme bereit ist, nimmt das Greifersystem 12 über Vakuumsauger 13 die Gruppe von Packungen 5 auf.

Durch die überlappende Lage der Packungen 5 zueinander kann eine Gruppe von n Packungen, wobei n als die Anzahl Packungen 5 einer Gruppe in Transportrichtung R definiert ist, von den Saugreifern 13 des Greifersystems 12 vom Gruppierband 3 abgehoben werden, ohne dass die nachfolgenden Packungen 5 negativ beeinflusst werden.

Die Aufnahme erfolgt hierbei vorzugsweise bei laufendem Gruppierband 3.

Das Greifersystem 12 bringt nun die Gruppe von Packungen 5 in eine Umverpackung 14 ein, dabei lassen die Vakuumsauger 13 die Packungen 5 nach Erreichen der gewünschten Lage frei. In der Umverpackung 14 ist in dem gezeigten Beispiel die Raumersparnis durch eine Überlappung X erreicht. Bei einer Gruppe von n Packungen mit einer Packungslänge L ist eine Raumersparnis mit ca. n-1 mal Überlappung X der Packung 5 zu erreichen.

Sollten die Geschwindigkeitsunterschiede zwischen v3 und v4 gering sein oder robuste Packungen und/oder Produkte verwendet werden, kann das Zuführband 2 entfallen und das Transportband 4 die Funktionen des Zuführbandes 2 gegenüber dem Gruppierband 3 übernehmen.

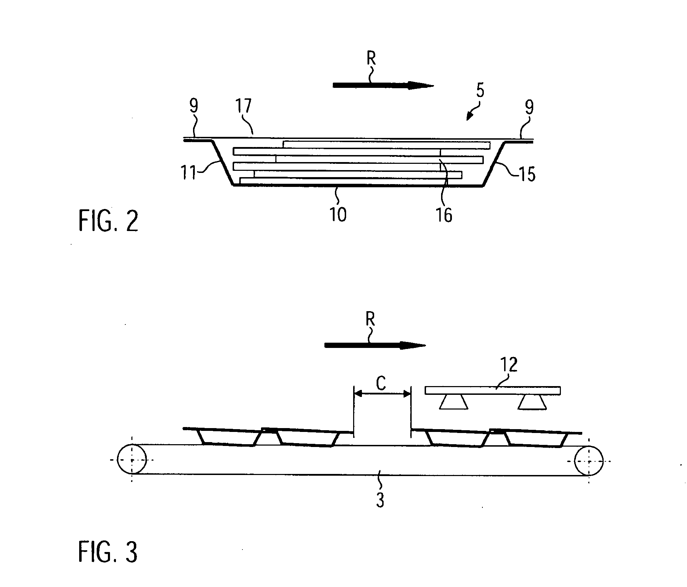

Die Figur 2 zeigt eine Packung 5 für die erfindungsgemäße Verwendung. Diese besteht aus einer Schale oder einer aus einer Folie tiefgezogenen Form mit einem Packungsboden 10, einer auf die Transportrichtung R bezogen vordere Seitenwand 15, einer hinteren Seitenwand 11 und einem Packungsrand 9, der an der vorderen und hinteren Seite nicht zwingend gleiche Abmessungen besitzen muss. In diese Schale bzw. tiefgezogene Form wird in einem nicht dargestellten Einlegebereich das Produkt 16 eingelegt, welches in der Figur 2 schematisch als geschindelte Scheiben, vorzugsweise als Nahrungsmittel wie Wurst- oder Käsescheiben, ausgeführt ist. Mit einer Deckelfolie 17 wird die Schale vorzugsweise unter Vakuum und/oder Atmosphärenaustausch mittels Begasung versiegelt.

In Figur 3 ist eine zweite Ausführungsform des erfindungsgemäßen Verfahrens dargestellt, bei der Gruppen von n Packungen auf dem Gruppierband 3 mit einem Abstand C positioniert werden, da dies für bestimmte Greifervarianten sinnvoll oder sogar notwendig sein kann. In einer nicht dargestellten Ausführungsvariante ist das Gruppier- und/oder Zuführband höhenverstellbar, um Einstellungen in Abhängigkeit zu Packungsabmessungen wie die Stärke des Packungsrandes durchführen zu können oder die Überlappung in wechselnder Reihenfolge, oben bzw. unten überlappend, ausführen zu können.

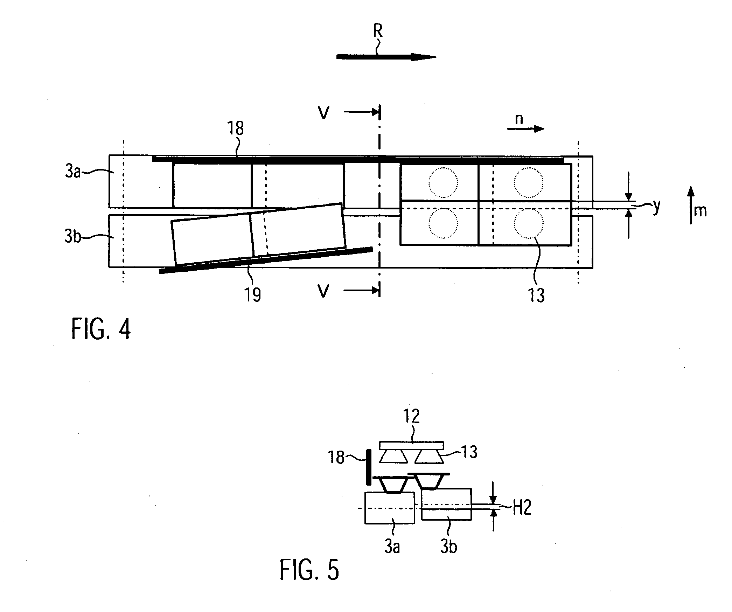

Figur 4 und 5 zeigen eine Weiterbildung der Vorrichtung 1, bei der eine quer zur Transportrichtung R zusätzliche seitliche Überlappung Y der Packung 5 ausgeführt ist. Dies wird mittels einer Anlageleiste 18 auf einem ersten Gruppierband 3a und einer Führungsleiste 19 auf einem zweiten Gruppierband 3b bewirkt. Diese zwei Gruppierbänder 3a und 3b sind nicht zwingend parallel angeordnet, auch eine Winkelstellung unterstützend für die Führungsleiste 19 ist möglich. Die Gruppierung der Packungen 5 in Transportrichtung R auf dem Gruppierbändern 3a und 3b erfolgt auf diesen Bändern, und die Synchronisierung der Gruppen zueinander auf den Gruppierbändern 3a und 3b kann mittels Steuerung der Bandgeschwindigkeiten realisiert werden, um beim Vorgang des seitlichen Überlappens auch die Position in der Transportrichtung R sicherzustellen. Während der Transportbewegung auf dem Gruppierband 3b entlang der Führungsleiste 19 nähern sich die Packungen den Packungen auf dem Gruppierband 3a an. Die Anlageleiste 18 dient als Gegenhalt für auftretende Querkräfte auf die Packungen 5 auf dem Gruppierband 3a und als definierte Lage für die Position beim Abnehmen durch das Greifersystem 12. Hier ist auch eine Ausführung mit mehr als zwei Gruppierbändern 3 denkbar und weitere Systeme zur Annäherung der Packungen 5 zueinander zum Überlappen.

Figur 5 zeigt einen Vertikalschnitt an der Stelle V-V in Figur 4. In Figur 5 ist der Höhenversatz H2 zwischen den Gruppierbändern 3a und 3b dargestellt. Dabei schieben sich die Packungen 5 auf dem Gruppierband 3b, die bereits in Transportrichtung R überlappt sind, mittels der Führungsleiste 19 über die Packungen 5 auf dem Gruppierband 3a. Gegen Ende beider Gruppierbänder 3a, 3b kann eine zweidimensionale Gruppe mit einer Anzahl n x m von Packungen, wobei m als die Anzahl Packungen 5 einer Gruppe quer zur Transportrichtung R definiert ist, als Gruppe vom Greifersystem 12 mittels der Sauggreifer 13 abgenommen und weitertransportiert werden.

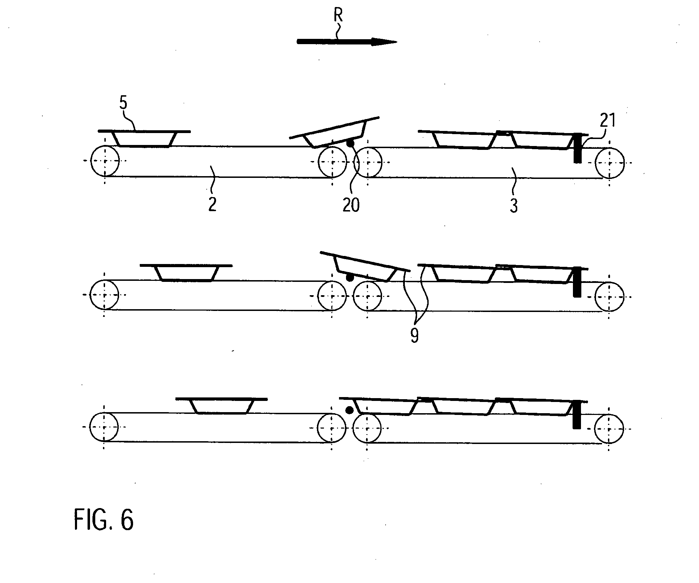

Eine Ausführungsvariante mit einer Einrichtung 20 zum Kippen einer Packung 5 beim Übergang vom Zuführband 2 auf das Gruppierband 3 ist in Figur 6 dargestellt. In einer einfachen technischen Ausführung kann es sich hierbei um eine Stange, eine Rolle oder andere Bauteile mit guter Gleit- oder Rolleigenschaft handeln, auf die die Packung 5 durch das Zuführband 2 aufgeschoben wird und nach dem Kippen um die Achse der Einrichtung 20 mit dem Gruppierband 3 in einem Winkel zur Ebene des Gruppierbandes 3 in Kontakt kommt, um von diesem in Transportrichtung R weiterbewegt zu werden und unter dem Packungsrand 9 der vorherigen Packung 5 zum Liegen zu kommen. Hierbei ist es notwendig, die vorherige Packung 5 oder Gruppe durch einen Anschlag 21 anzuhalten, während sich das Gruppierband 3 weiterbewegt und der Packungsrand 9 an der hinteren Seitenwand 11 der vorherigen Packung 5 anschlägt. Die Einrichtung 20 kann auch für eine Überlappung der nachfolgenden Packung 5 über der vorherigen Packung 5 verwendet werden. Dies wird durch die Position der vorherigen Packung 5 auf dem Gruppierband 3 bestimmt.

Die Einrichtung 20 ist nicht darauf beschränkt, sich im Bereich des Übergangs vom Zuführband 2 zum Gruppierband 3 zu befinden. Ebenso ist es denkbar, dass die Überlappung nach dem Übergang auf dem Gruppierband 3 erfolgt.

In einer weiteren Ausführungsvariante ist es denkbar, erst die Überlappung in Quer- und anschließend in Längsrichtung auszuführen.

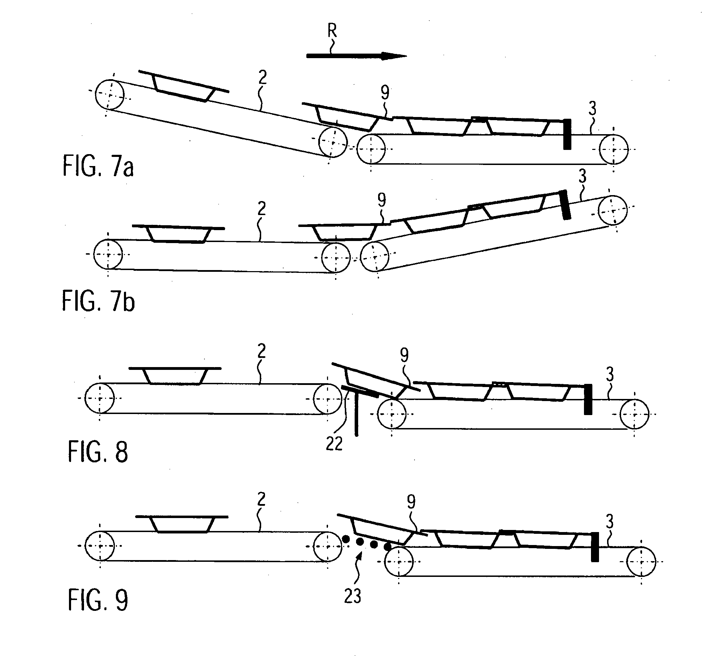

In Figuren 7a, 7b ist eine weitere Ausführungsvariante gezeigt, bei der die Transportfläche des Zuführbands 2 und des Gruppierbands 3 in einem Winkel von kleiner 180° zueinander geneigt werden, um bei der Packungsübergabe vom Zuführband 2 auf das Gruppierband 3 den Packungsrand 9 der nachfolgenden Packung 5 unter den Packungsrand 9 der vorherigen Packung 5 zu positionieren.

Für einen Einsatz, bei dem eine Neigung des Zuführbandes zum Gruppierband nicht möglich ist, können Einrichtungen wie eine Rutsche 22, in Figur 8 gezeigt, oder eine Rollenbahn 23, wie in Figur 9 gezeigt, vor dem Gruppierband 3 angebracht werden. Weitere wirkungsähnliche Einrichtungen sind hier noch denkbar.

## Patentansprüche

1. Verfahren zum Gruppieren von Packungen (5) mit einem formstabilen überstehenden Rand (9) auf einem Gruppierband (3), wobei der Abstand der Packungen (5) auf dem Gruppierband (3) verringert wird,
**dadurch gekennzeichnet, dass** eine Überlappung des Randes (9) einer vorherigen Packung (5) über den Rand (9) der nachfolgenden Packung (5) erzeugt wird,
wobei Packungen (5) verwendet werden, die eine Schale oder eine aus einer Folie tiefgezogene Mulde und eine auf dem Rand (9) umlaufend aufgesiegelte Deckelfolie (17) aufweisen,
und wobei ferner eine hintere Seitenwand (11) einer Packung (5) als Anschlag zwischen zwei benachbarten überlappten Packungen (5) dient, indem die Geschwindigkeit (v3) des Gruppierbandes (3) gegenüber der Geschwindigkeit (v2) eines Zuführbandes (2) verringert oder das Gruppierband (3) bei laufendem Zuführband (2) angehalten wird oder ein Anschlag (21) auf dem Gruppierband (3) vorhanden ist, der die vorherige Packung (5) oder die Gruppe anhält, während das Zuführband (2) und das Gruppierband (3) weiterlaufen.

2. Verfahren nach Anspruch 1, **dadurch gekennzeichnet, dass** die Geschwindigkeit von mindestens einem Band (2,3) von einer Steuerung (8) geregelt wird, damit beim Übergang der Packung (5) von dem Zuführband (2) auf das Gruppierband (3) die Geschwindigkeiten beider Transportbänder (2,3) synchronisiert sind.

3. Verfahren nach einem der vorangehenden Ansprüche, **dadurch gekennzeichnet, dass** auf dem Gruppierband (3) Gruppen mit n Packungen erzeugt werden und zwischen den Gruppen ein Abstand (C) erzeugt wird.

4. Verfahren nach einem der vorangehenden Ansprüche, **dadurch gekennzeichnet, dass** ein zweites Überlappen (Y) in Querrichtung zum ersteren Überlappen (X) in Längsrichtung bezogen auf die Transportrichtung (R) von wenigstens zwei kontinuierlich überlappten Packungsgruppen erfolgt.

5. Verfahren nach einem der vorangehenden Ansprüche, **dadurch gekennzeichnet, dass** eine Gruppe von n Packungen (5) vom Gruppierband (3) mit einem Greifersystem (12) abtransportiert wird.

6. Verfahren nach einem der vorangehenden Ansprüche, **dadurch gekennzeichnet, dass** die Überlappung einander benachbarter Packungen (5) in wechselnder Reihenfolge, oben bzw. unten überlappend, ausgeführt wird.

## Claims

1. Method of grouping packages (5) with a dimensionally stable protruding edge (9) on a grouping belt (3), wherein the spacing of the packages (5) on the grouping belt (3) is reduced,
**characterised in that** an overlap of the edge (9) of a preceding package (5) is produced over the edge (9) of the following package (5),
wherein packages (5) are used, which have a tray or a cavity deep-drawn in a film and a lid film (17) which is circumferentially sealed onto the edge (9),
wherein further a rear side wall (11) of a package (5) serves as a stop between two adjacent, overlapping packages (5) by reducing the speed (v3) of the grouping belt (3) in comparison to the speed (v2) of a feed belt (2) or by stopping the grouping belt (3) while the feed belt (2) continues running or by providing a stop (21) on the grouping belt (3) which stops the preceding package (5) or the group while the feed belt (2) and the grouping belt (3) continue running.

2. Method according to claim 1, **characterised in that** the speed of at least one belt (2, 3) is controlled by a controller (8) so that on the transfer of the package (5) from the feed belt (2) to the grouping belt (3) the speeds of both conveyor belts (2, 3) are synchronised.

3. Method according to one of the preceding claims, **characterised in that** groups with n packages are produced on the grouping belt (3) and a spacing (C) is produced between the groups.

4. Method according to one of the preceding claims, **characterised in that** a second overlap (Y) occurs in the transverse direction to the first overlap (X) in the longitudinal direction referred to the transport direction (R) of at least two continuously overlapped package groups.

5. Method according to one of the preceding claims, **characterised in that** a group of "n" packages (5) is transported away from the grouping belt (3) with a gripper system (12).

6. Method according to one of the preceding claims, **characterised in that** the overlap between adjacent packages (5) is generated by alternatively overlapping the packages (5) from above and from below.

## Revendications

1. Procédé de groupement d'emballages (5) avec un bord indéformable faisant saillie (9) sur une bande de groupement (3), dans lequel l'espacement des emballages (5) sur la bande de groupement (3) est réduit,
**caractérisé en ce qu'**un chevauchement du bord (9) d'un emballage précédent (5) sur le bord (9) de l'emballage suivant (5) est provoqué,
dans lequel sont utilisés des emballages (5) qui comportent une coque ou une cavité emboutie dans un film ainsi qu'un film de couvercle scellé (17) qui entoure le bord (9),
et dans lequel une paroi latérale arrière (11) d'un emballage (5) sert en outre de butée entre deux emballages adjacents (5) qui se chevauchent, moyennant quoi la vitesse (v3) de la bande de groupement (3) est réduite par rapport à la vitesse (v2) d'une bande d'alimentation (2), ou la bande de groupement (3) est retenue lorsque la bande d'alimentation (2) est en fonctionnement, ou une butée (21) qui retient l'emballage précédent (5) ou le groupe est présente sur la bande de groupement (3), alors que la bande d'alimentation (2) et la bande de groupement (3) continuent à fonctionner.

2. Procédé selon la revendication 1, **caractérisé en ce que** la vitesse d'au moins une bande (2, 3) est réglée par une commande (8) de telle sorte que lors de la transition de l'emballage (5) depuis la bande d'alimentation (2) sur la bande de groupement (3), les
vitesses des deux bandes transporteuses (2, 3) sont synchronisées.

3. Procédé selon l'une des revendications précédentes, **caractérisé en ce que** des groupes de n emballages sont créés sur la bande de groupement (3) et **en ce qu'**un espacement (C) est créé entre les groupes.

4. Procédé selon l'une des revendications précédentes, **caractérisé en ce qu'**un deuxième chevauchement (Y) d'au moins deux groupes d'emballages qui se chevauchent sans interruption est créé en direction transversale par rapport au premier chevauchement (X) en direction longitudinale par rapport à la direction de transport (R).

5. Procédé selon l'une des revendications précédentes, **caractérisé en ce qu'**un groupe de n emballages (5) est évacué de la bande de groupement (3) à l'aide d'un système préhenseur (12).

6. Procédé selon l'une des revendications précédentes, **caractérisé en ce que** le chevauchement d'emballages adjacents (5) est réalisé en série alternante, avec un chevauchement respectivement en haut et en bas.
